# EUROPÄISCHE PATENTSCHRIFT

(11) **EP 2 806 184 B1**
(45) Veröffentlichungstag und Bekanntmachung des Hinweises auf die Patenterteilung: **03.01.2018**
(21) Anmeldenummer: 14169311.9
(22) Anmeldetag: 21.05.2014
(51) Int. Cl.: F16F 13/14

(54) **Hybridstopper eines Hydrolagers**
Hybrid stopper of a hydromount
Dispositif de blocage hybride d'un support hydraulique

(30) Priorität: 22.05.2013 DE 102013008710
(43) Veröffentlichungstag der Anmeldung: 26.11.2014
(73) Patentinhaber: Wilhelm Schröder GmbH, 58849 Herscheid (DE)
(72) Erfinder: Okulla, Kai, 58791 Werdohl (DE); Bieker, Udet, 58849 Herscheid (DE)
(74) Vertreter: Hoefer & Partner Patentanwälte mbB

(56) Entgegenhaltungen:
- EP-A1- 1 348 885
- DE-A1-102008 058 239
- DE-U1- 8 717 597
- US-A1- 2006 006 592
- US-A1- 2009 189 323

## Beschreibung

Die Erfindung betrifft einen Hybridstopper eines Hydrolagers gemäß dem Oberbegriff des Anspruches 1.

Ein derartiger Hybridstopper eines Hydrolagers weist ein inneres Kunststoffteil auf, das von einem äußeren Metallmantel umgeben ist, der als Aluminium-Druckgussteil ausgebildet ist. Derartige Hybridstopper werden üblicherweise auf der Bremsseite und Vollkunststoffstopper des Hydrolagers auf der Beschleunigungsseite eingesetzt und müssen die auftretenden Druckbelastungen aufnehmen.

Im Rahmen der Erfindung durchgeführte Untersuchungen haben jedoch ergeben, dass der bekannte Vollkunststoffstopper den in der Praxis auftretenden Druckbelastungen nicht in ausreichendem Maße standhalten kann.

Aus der DE 87 17 597 U1 ist eine hydraulisch dämpfende Buchse bekannt, die innerhalb einer Arbeitskammer einen im Buchsenkern festgelegten Druckanschlag aufweist, der ein Federstahlblech umfassen kann, das klammerförmig gebogen ist, so dass ein zylinderabschnittförmiger Mittelbereich und zwei seitlich abragende, gewölbt verlaufende Flügel erzeugt werden. Die Oberseite des klammerförmig gebogenen Federstahlblechs ist dabei mit einem polsterförmig gewölbten und einem freien Zylinderspalt überdeckenden gummielastischen Anschlag überdeckt.

Aus der US 2009/0189323 A1 ist eine fluidgefüllte zylindrische Schwingungsdämpfungsvorrichtung bekannt, die ein Stopperteil aufweist, das ein im Wesentlichen halbkreisförmig ausgebildetes Metallteil ist, das mit einem Stopperbereich versehen ist, auf dem ein Gummikissen aufliegt.

Es ist daher Aufgabe der vorliegenden Erfindung, einen Hybridstopper der im Oberbegriff des Anspruches 1 angegebenen Art zu schaffen, der es möglich macht, Bruchbelastungen von mehr als 50 kN auf der Beschleunigungsseite zu erreichen.

Die Lösung dieser Aufgabe erfolgt durch die Merkmale des Anspruches 1.

Zu den Vorteilen des erfindungsgemäßen Hybridstoppers zählt, dass Druckbelastungen bis zu 80 kN erreichbar sind und darüber hinaus die Ausbildung des Metallmantels als Stanzteil aus Stahl eine kostengünstige Alternative zum bisher bekannten Aluminium-Druckgussteil ist.

Bevorzugterweise wird das Kunststoffteil in den Metallmantel eingespritzt.

Als besonders bevorzugte Stahlmaterialien können Stähle der Spezifikation S 355 MC, S 420 MC, S 460 MC und S 500 MC zum Einsatz kommen.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: ein Hydrolager, bei dem ein erfindungsgemäßer Hybridstopper zum Einsatz kommen kann;
- Fig. 2 und 3: zwei Perspektiv-Ansichten eines erfindungsgemäßen Hybridstoppers;
- Fig. 4: eine perspektivische Ansicht eines Metallmantels des erfindungsgemäßen Hybridstoppers; und
- Fig. 5: eine Perspektiv-Darstellung eines Kunststoffteils, das in den Metallmantel gemäß Fig. 4 eingespritzt werden kann.

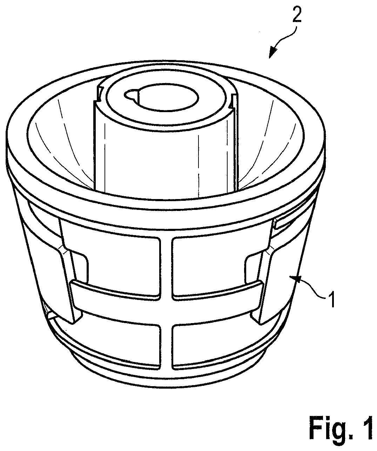

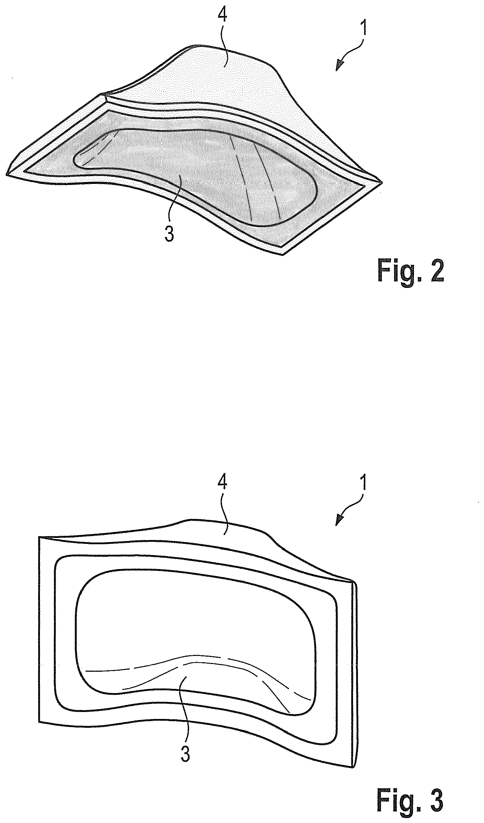

In Fig. 1 ist ein Hydrolager 2 dargestellt, das auf seiner Bremsseite mit einem erfindungsgemäßen Hybridstopper 1 versehen ist, der nachfolgend anhand der Fig. 2 bis 5 im Einzelnen erläutert wird.

Die Fig. 2 und 3 zeigen zwei unterschiedliche perspektivische Darstellungen des Hybridstoppers 1, der ein inneres Kunststoffteil 3 aufweist, das von einem Metallmantel 4 umgeben ist, wie sich dies aus den Fig. 2 und 3 im Einzelnen ergibt.

Wie sich aus einer Zusammenschau der Fig. 2 bis 5 ergibt, weist der äußere Metallmantel 4, der als Stanzteil aus Stahl ausgebildet ist, einen Innenraum 5 auf, in den das Kunststoffteil 3 eingespritzt werden kann, das einen Innenraum 6 aufweist, in dem im im Hydrolager 2 montierten Zustand eine Lagerkugel angeordnet werden kann, auf der der Hybridstopper 1 schwimmend aufliegt.

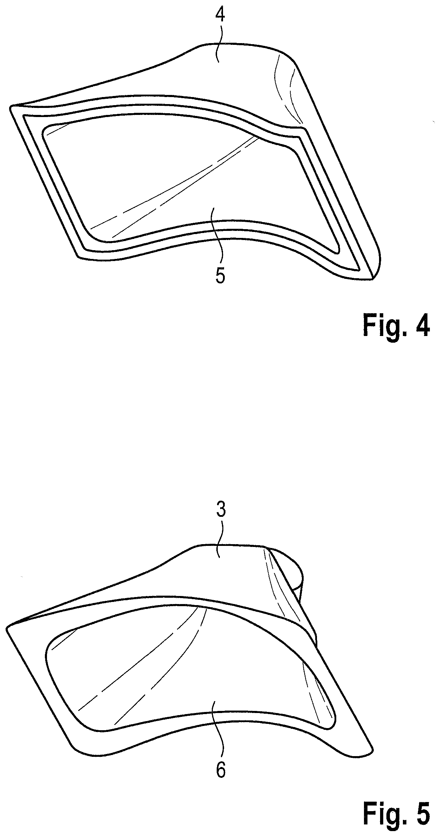

Dementsprechend ist die Außengeometrie des inneren Kunststoffmantels und dessen Dimensionierung an die Innengeometrie des Metallmantels 4 und seine Dimensionen angepasst, was sich insbesondere aus einer Zusammenschau der Fig. 4 und 5 ergibt, die das Kunststoffteil 3 und den Metallmantel 4 jeweils separat darstellen.

Neben der vorstehenden schriftlichen Beschreibung der Erfindung wird hiermit zu deren ergänzender Offenbarung explizit auf die zeichnerische Darstellung der Erfindung in den Fig. 1 bis 5 Bezug genommen.

### Bezugszeichenliste

- 1: Hybridstopper
- 2: Hydrolager
- 3: Kunststoffteil
- 4: Metallmantel
- 5: Innenraum des Metallmantels 4
- 6: Innenraum des Kunststoffteils 3

## Patentansprüche

1. Hybridstopper (1) eines Hydrolagers (2),
- mit einem inneren Kunststoffteil (3), das einen Innenraum (6) aufweist, und
- mit einem Metallmantel (4),
**dadurch gekennzeichnet,**
- **dass** der Metallmantel (4) das Kunststoffteil (3) umgibt und als Stanzteil aus Stahl ausgebildet ist,
- wobei der Metallmantel (4) einen Innenraum (5) zur Aufnahme des Kunststoffteils (3) aufweist und die Außengeometrie des inneren Kunststoffteils (3) und dessen Dimensionierung an die Innengeometrie des Metallmantels (4) und an seine Dimension angepasst ist.

2. Hybridstopper nach Anspruch 1, **dadurch gekennzeichnet, dass** das Kunststoffteil (3) in den Metallmantel (4) eingespritzt ist.

## Claims

1. Hybrid stopper (1) of a hydromount (2), comprising
- an inner plastic part (3) having an inner space (6), and
- a metal jacket (4),
**characterized in that**
- the metal jacket (4) encloses the plastic part (3) and is formed as a punch part made from steel,
- wherein the metal jacket (4) comprises an inner space (6) for accommodating said plastic part (3), and the external geometry of the inner plastic part (3) and its sizing is adapted to the internal geometry of the metal jacket (4) and its dimension.

2. Hybrid stopper (1) of claim 1, **characterized in that** the plastic part (3) is injected into the metal jacket (4).

## Revendications

1. Dispositif de blocage hybride (1) d'un palier hydraulique (2),
- avec une partie en matière plastique (3) intérieure qui présente un espace intérieur (6), et
- avec une enveloppe métallique (4),
**caractérisé en ce**
- **que** l'enveloppe métallique (4) entoure la partie en matière plastique (3) et est réalisée comme partie estampée en acier,
- dans lequel l'enveloppe métallique (4) présente un espace intérieur (5) pour la réception de la partie en matière plastique (3) et la géométrie extérieure de la partie en matière plastique (3) intérieure et son dimensionnement sont adaptés à la géométrie intérieure de l'enveloppe métallique (4) et à sa dimension.

2. Dispositif de blocage hybride selon la revendication 1, **caractérisé en ce que** la partie en matière plastique (3) est injectée dans l'enveloppe métallique (4).
